# EUROPEAN PATENT APPLICATION

(11) **EP 3 045 721 A1**
(43) Date of publication of application: **20.07.2016**
(21) Application number: 16150948.4
(22) Date of filing: 12.01.2016
(51) Int. Cl.: F04B 1/20, F03C 1/06, F02C 7/32, F02C 7/36

(54) **VARIABLE WOBBLER FOR HYDRAULIC UNIT**

(30) Priority: 14.01.2015 US 201514596423
(71) Applicant: Hamilton Sundstrand Corporation, Charlotte, NC 28217 (US)
(72) Inventor: CAMPBELL, Kris, Poplar Grove, IL Illinois 61065 (US); LEMMERS, Glenn C. Jr., Loves Park, IL Illinois 61111 (US); SMITH, Doren C., Rockford, IL Illinois 61101 (US); MARTIN, Ted A., Byron, IL Illinois 61010 (US); DELL, Jonathan C., Carpentersville, IL Illinois 60110 (US); YUNG, Jong-Yeong, Rockford, 61114 (US)
(74) Representative: Bridge, Kerry Ann

(57) **Abstract**

A variable wobbler 54 of a hydraulic unit 32 includes a body 60 having a first end 64 and an opposite second end 66, the first end 64 including an annular wall 68 and an inner surface 72 configured to contact a piston of the hydraulic unit 32. The body 60 further includes an outer wall 82, an inner wall 84 defining an inner diameter 86, and a conical inner wall 85 extending from the inner wall. The variable wobbler 54 further includes a first trunnion 104 extending outwardly from the body and a second trunnion 106 extending outwardly from the body.

## Description

### BACKGROUND OF THE INVENTION

Exemplary embodiments of this invention generally relate to an integrated drive generator, and more particularly, to a variable wobbler of a hydraulic unit of an integrated drive generator.

Aircrafts currently rely on electrical, pneumatic, and hydraulic systems for secondary power. A typical electrical system utilizes an integrated drive generator (IDG) coupled to each engine to provide a fixed frequency power to the distribution system and loads. One type of IDG includes a generator, a hydraulic unit, and a differential assembly arranged in a common housing. The differential assembly is operably coupled to a gas turbine engine via an input shaft. The rotational speed of the input shaft varies during the operation of the gas turbine engine. The hydraulic unit cooperates with the differential assembly to provide a constant speed to the generator throughout engine operation.

Due to packaging constraints, components of the hydraulic unit, such as variable and fixed wobblers must be redesigned.

### BRIEF DESCRIPTION OF THE INVENTION

According to one embodiment of the invention, a variable wobbler of a hydraulic unit is provided. The variable wobbler includes a body having a first end and an opposite second end, the first end including an annular wall and an inner surface configured to contact a piston of the hydraulic unit. The body further includes an outer wall, an inner wall defining an inner diameter, and a conical inner wall extending from the inner wall. The variable wobbler further includes a first trunnion extending outwardly from the body and a second trunnion extending outwardly from the body.

In addition to one or more of the features described above, or as an alternative, further embodiments may include: wherein a distance between opposed portions of the outer wall is between approximately 2.64 ± 0.010 inches (6.7056 ± 0.0254 cm) and approximately 2.701 ± 0.002 inches (6.8605 ± 0.0051 cm); wherein the inner diameter is approximately 1.053 ± 0.002 inches (2.6746 ± 0.0051 cm); wherein the conical inner wall is oriented at an angle relative to an axis extending through a center of the inner diameter, wherein the angle is between approximately 15° and approximately 19°; wherein the conical inner wall includes a first end adjacent the inner wall, an opposite second end, and a midpoint disposed between the first end and the second end, wherein the conical inner wall first end defines a first diameter, the midpoint defines a second diameter, and the conical inner wall second end defines a third diameter; wherein the first diameter is approximately 1.053 ± 0.002 inches (2.6746 ± 0.0051 cm); wherein the second diameter is approximately 1.188 inches (3.0175 cm); wherein a distance between the conical inner wall midpoint and the inner surface is approximately 0.282 ± 0.015 inches (0.7163 ± 0.0381 cm); wherein the inner surface comprises a friction-reducing coating; wherein the friction-reducing coating is between approximately 3 microns and approximately 5 microns; wherein the friction-reducing coating is an Amorphous Diamond-like Carbon Coating; wherein the first trunnion and the second trunnion are diametrically opposed; wherein a distance between the first and second trunnions is approximately 2.701 ± 0.002 inches (6.8605 ± 0.0051 cm); and/or wherein the first trunnion has a length of approximately 0.375 ± 0.010 inches (0.9525 ± 0.0254 cm), and the second trunnion has a length of approximately 0.892 ± 0.010 inches (2.2657 ± 0.0254 cm).

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a generator system of an aircraft;
FIG. 2 is a cross-sectional schematic view of an example of an integrated drive generator (IDG);
FIG. 3 is a cross-sectional view of an example of a hydraulic unit of an integrated drive generator;
FIG. 4 is a perspective view of an example of a variable wobbler that may be used with the hydraulic unit of FIG. 3;
FIG. 5 is a top view of the variable wobbler shown in FIG. 4;
FIG. 6 is a cross-sectional view of the variable wobbler shown in FIG. 4 and taken along line B-B;
FIG. 7 is a side view of the variable wobbler shown in FIG. 4;
FIG. 8 is a partial cross-sectional view of the variable wobbler shown in FIG. 7 and taken along line C-C;
FIG. 9 is a cross-sectional view of the variable wobbler shown in FIG. 4 and taken along line A-A;
FIG. 10 is a bottom view of the variable wobbler shown in FIG. 4;
FIG. 11 is a side view of the variable wobbler shown in FIG. 4;
FIG. 12 is an enlarged view of the variable wobbler shown in FIG. 7 as defined by H detail view boundary;
FIG. 13 is an enlarged view of the variable wobbler shown in FIG. 9 as defined by F detail view boundary; and
FIG. 14 is a cross-sectional view of the variable wobbler shown in FIG. 5 and taken along line D-D.

The detailed description explains embodiments of the invention, together with advantages and features, by way of example with reference to the drawings.

### DETAILED DESCRIPTION OF THE INVENTION

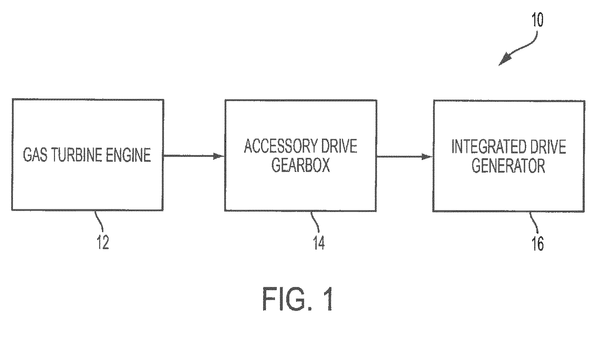

Referring now to FIG. 1, an example of a generator system 10 is schematically illustrated. The system 10 includes a gas turbine engine 12 that provides rotational drive to an integrated drive generator (IDG) 16 through an accessory drive gearbox 14 mounted on the gas turbine engine 12. The accessory drive gearbox is coupled to a spool of the engine 12, and the speed of the spool varies throughout the entire engine operation.

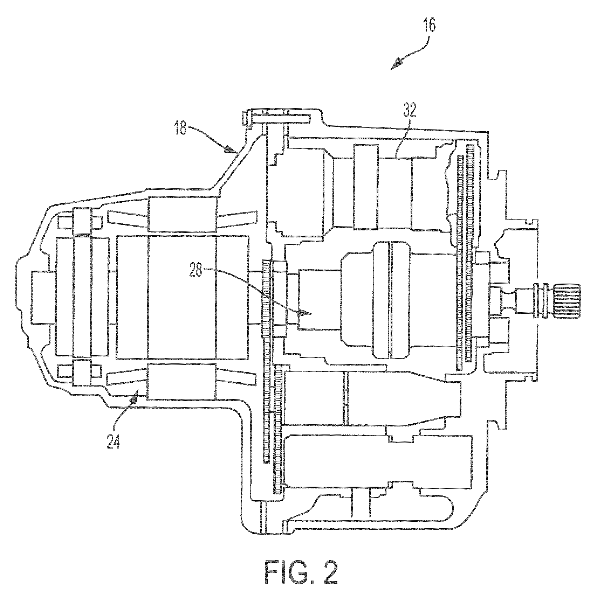

An example of an IDG 16 including a housing 18 is shown in FIG. 2. In the illustrated embodiment, the IDG 16 includes an input shaft configured to receive rotational drive from the accessory drive gearbox 14. The rotational speed of the input shaft varies depending upon the operation of the engine. To this end, a hydraulic unit 32 cooperates with the differential assembly 28 to convert the variable rotational speed from the input shaft to a fixed rotational output speed to the generator 24.

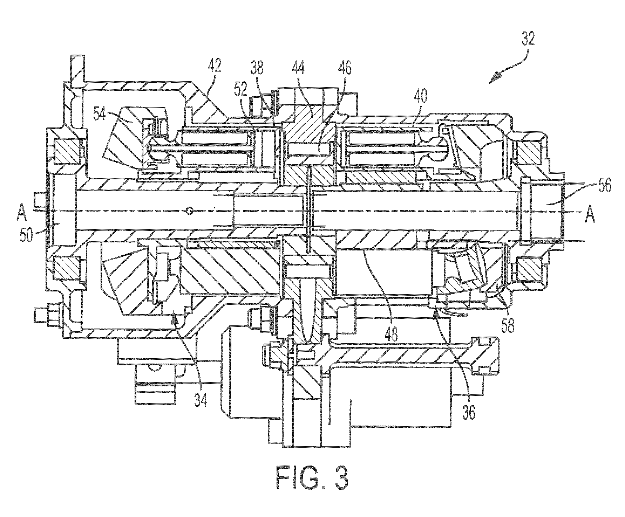

Referring now to FIG. 3, an example of a hydraulic unit 32 of the IDG 16 is illustrated in more detail. The hydraulic unit 32 includes a variable displacement hydraulic pump 34 and a fixed displacement hydraulic motor 36. The pump 34 and motor 36 have respective cylinder blocks 38 and 40 which are arranged for rotation about a common axis A within a housing 42 on opposite sides of a stationary port plate 44 of the hydraulic unit 32. The port plate 44 is formed with apertures 46 through which hydraulic fluid communication between the pump 34 and the motor 36 is established during normal operation of the hydraulic unit 32. A biasing mechanism 48 resiliently biases the cylinder blocks 38, 40 in the direction of the port plate 44.

The operation of the hydraulic unit 32 in an IDG 16 of an aircraft involves transmission of torque from an engine of the airplane to an input, which rotates the input shaft 50 of the hydraulic unit 32 about axis A. The cylinder block 38 of the pump 34 is connected to the input shaft 50 for rotation therewith. Pistons 52 within the cylinder block 38 of the pump 34 are displaced during this rotation an amount which is a function of the setting of a variable wobbler 54 of the pump 34. Variable wobbler 54 sets the stroke of each piston 52 depending on its angular position around axis A and on the setting of the wobbler itself.

Hydraulic fluid under pressure from the pump 34 is delivered to the hydraulic motor 36 through the port plate 44 for rotating the cylinder block 40 and an output shaft 56 to which it is fixedly connected. A fixed wobbler 58 of the motor 36 is fixed so that the operating speed of the motor 36 is a function of the displacement of the pump 34. Fixed wobbler 58 sets the stroke of each piston 52 depending on its angular position around axis A. The rotary output from output shaft 56 is added to or subtracted from the rotary motion from the engine through the conventional differential gearing of an IDG 16 for operating an electrical generator at a substantially constant rotational speed. That is, since the speed of the rotation from the airplane engine to the input 50 of the hydraulic unit 32 will vary, the position of the variable wobbler 54 is adjusted in response to these detected speed variations for providing the necessary reduction or increase in this speed for obtaining the desired constant output speed to the generator. During normal operation, there is a hydrostatic balance of the cylinder blocks and port plate. Although the hydraulic unit illustrated and described herein refers to the variable unit as a pump and the fixed unit as a motor, hydraulic units having other configurations, such as where the variable unit functions as a motor and the hydraulic unit operates as a pump for example, are within the scope of the invention.

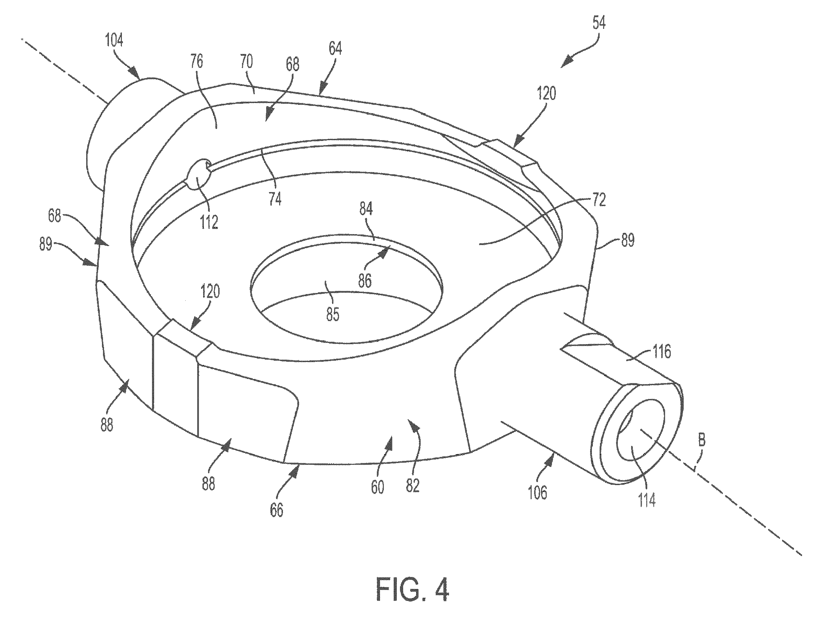

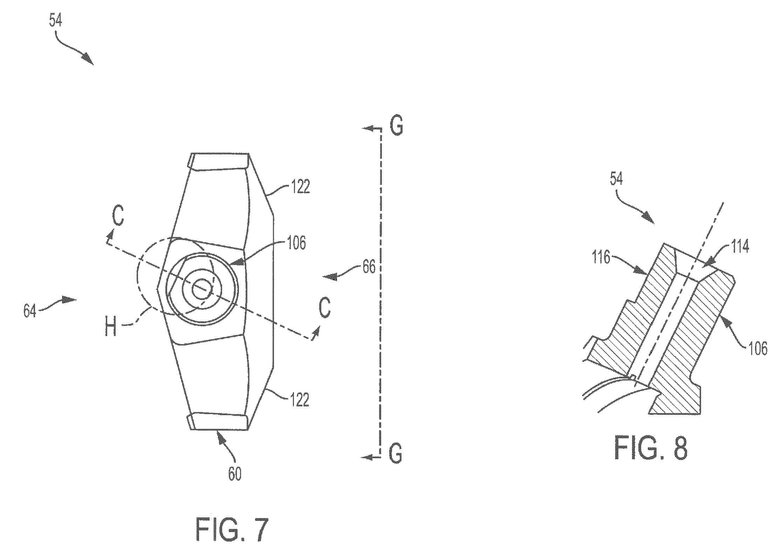

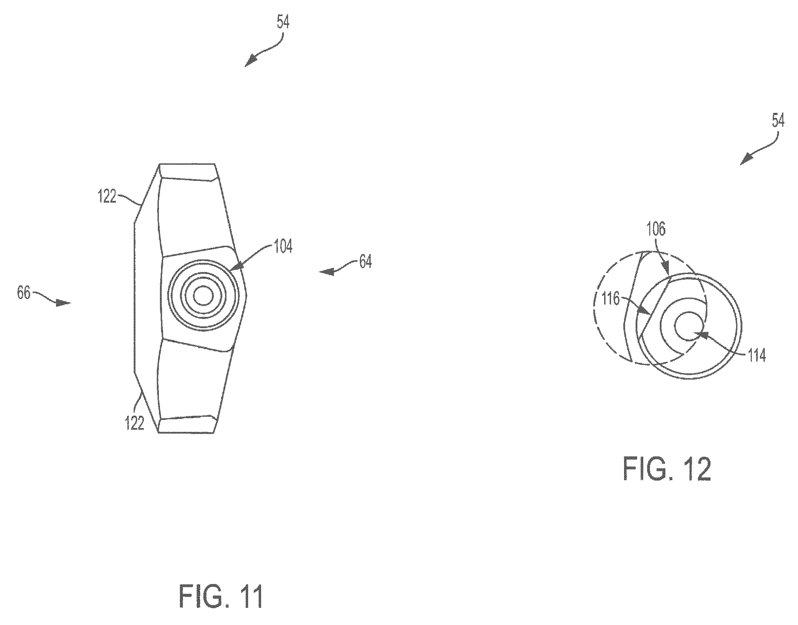

Referring now to FIGS. 4-14, variable wobbler 54 of hydraulic unit 32 according to an embodiment of the invention is illustrated in more detail. Variable wobbler 54 includes a body 60 having a first end 64 and a second, opposite end 66. First end 64 includes an annular wall 68 defining an outer surface 70, and an inner surface 72 configured to contact pistons 52. Variable wobbler 54 is configured to rotate about an axis B to vary a wobble rotation thereof.

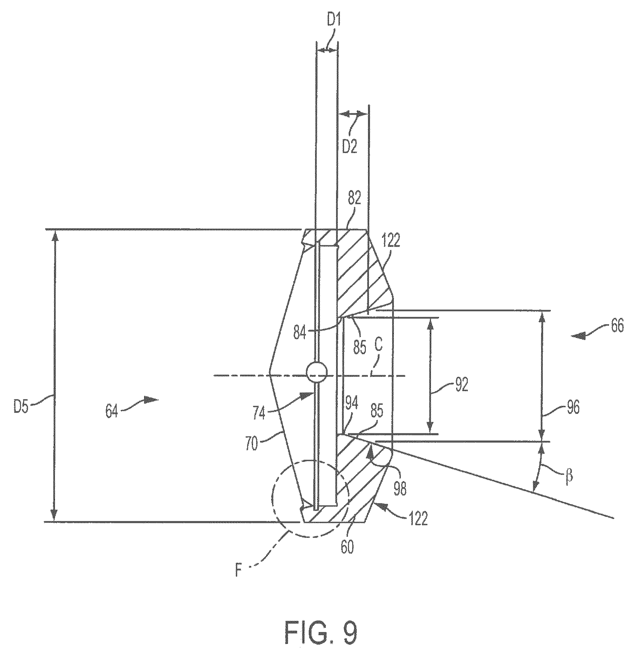

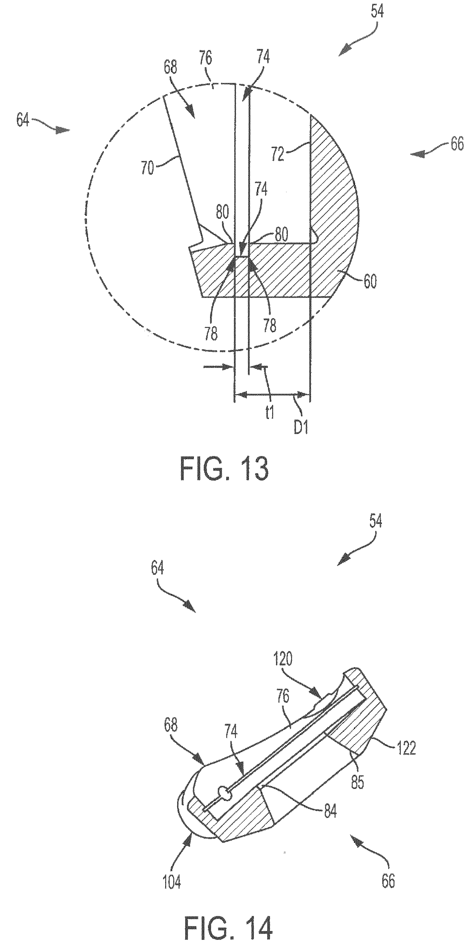

As shown in FIGS. 4, 9, and 13, a groove 74 is formed in an inner wall 76 of annular wall 68. In one embodiment, annular wall 68 has an inner diameter of approximately 2.355 ± 0.004 inches (5.9817 ± 0.0102 cm). In another embodiment, annular wall 68 has an inner diameter of 2.355 ± 0.004 inches. Groove 74 may be configured hold a retaining ring (not shown) and is disposed a distance D1 from inner surface 72 (FIG. 9). In one embodiment, distance D1 is approximately 0.190 ± 0.002 inches (0.0483 ± 0.0051 cm). In another embodiment, distance D1 is 0.190 ± 0.002 inches. Groove 74 may has a thickness t1 (FIG. 13). In one embodiment, thickness t1 is approximately 0.0345 ± 0.0015 inches (0.0876 ± 0.00381 cm). In another embodiment, thickness t1 is 0.0345 ± 0.0015 inches. Groove 74 may include rounded corners 78 and corner breaks 80 on each side of groove 74. In one embodiment, rounded corners 78 may have a radius of less than or equal to approximately 0.005 inches (0.0127 cm). In another embodiment, rounded corners 78 may have a radius of less than or equal to 0.005 inches. In one embodiment, corner break 80 has a radius less than or equal to approximately 0.005 inches (0.0127 cm). In another embodiment, corner break 80 has a radius less than or equal to approximately 0.005 inches. In one embodiment, groove 74 has an outer diameter of approximately 2.431 ± 0.005 inches (6.1747 ± 0.0127 cm). In another embodiment, groove 74 has an outer diameter of 2.431 ± 0.005 inches.

Inner surface 72 may include a coating to reduce friction and wear between surface 72 and pistons 52. In one embodiment, the coating is titanium nitride disposed by physical vapor deposition. However, other friction-reducing coating materials (e.g., an Amorphous Diamond-like Carbon Coating) may be disposed on surface 72 by other suitable methods. Further, additional portions and surfaces of variable wobbler 54 may include the coating described herein. In one embodiment, the coating has a thickness of approximately 1-4 microns. In another embodiment, the coating has a thickness of 1-4 microns. In one embodiment, the coating has a thickness of approximately 3-5 microns. In another embodiment, the coating has a thickness of 3-5 microns.

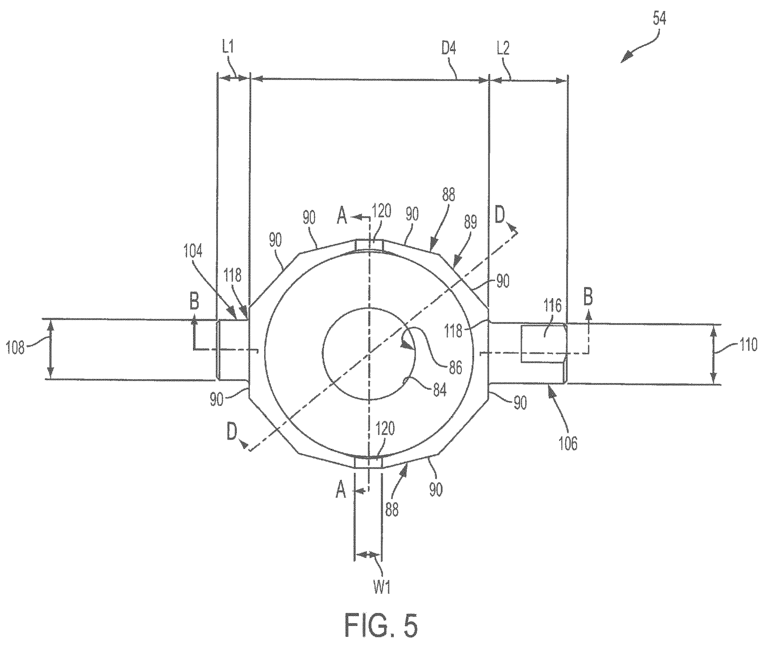

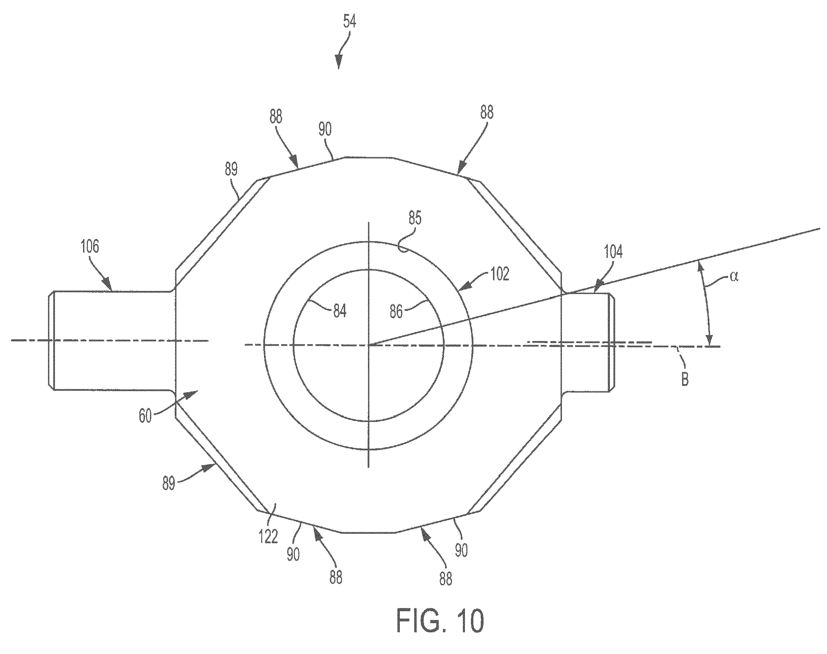

Body 60 defines an outer wall 82 and includes an inner wall 84 defining an inner diameter 86. Outer wall 82 may include one or more cutouts 88, 89 (FIG. 4) such that outer wall 82 includes straight-walled portions 90 about its perimeter (see FIG. 5). In one embodiment, cutouts 88 form walls that are oriented at an angle α relative to axis B (FIG. 10). In one embodiment, angle α is approximately 15°. In another embodiment, angle α is 15°. In one embodiment, a distance D4 (FIG. 5) between opposed walls 90 is approximately 2.701 ± 0.002 inches (6.8605 ± 0.0051 cm). In another embodiment, distance D4 is 2.701 ± 0.002 inches. In yet another embodiment, a distance D5 (FIG. 9) between opposed walls 90 is approximately 2.64 ± 0.010 inches (6.7056 ± 0.0254 cm). In another embodiment, distance D5 is 2.64 ± 0.010 inches.

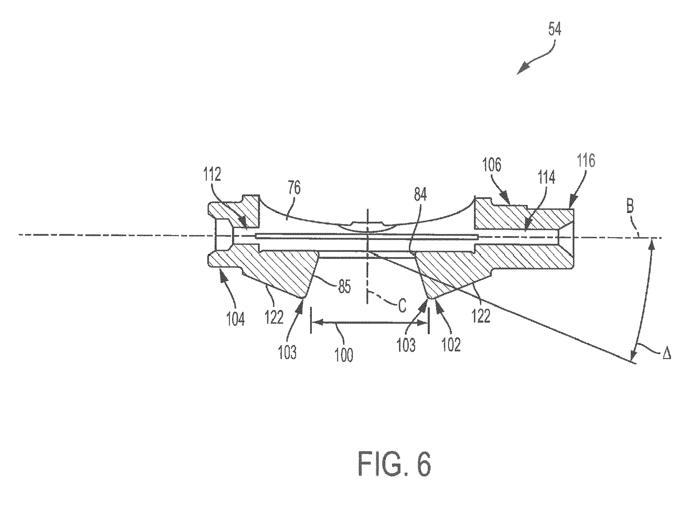

As illustrated in FIGS. 6 and 9, a conical inner wall 85 extends from inner wall 84 such that conical wall 85 has a first diameter 92 at a first end 94, a second diameter 96 at a midpoint 98, and a third diameter 100 at a second end 102. Conical inner wall 85 is oriented at an angle β relative to an axis C of variable wobbler 54 (FIG. 9). In one embodiment, angle β is between approximately 15° and approximately 19°. In another embodiment, angle β is between 15° and 19°. In one embodiment, angle β is approximately 17° ± 1°. In another embodiment, angle β is 17° ± 1°.

In one embodiment, inner diameter 86 and first diameter 92 are approximately 1.053 ± 0.002 inches (2.6746 ± 0.0051 cm). In another embodiment, inner diameter 86 and first diameter 92 is 1.053 ± 0.002 inches. In one embodiment, second diameter 96 is approximately 1.188 inches (3.0175 cm). In another embodiment, second diameter 96 is 1.188 inches. As shown in FIG. 9, midpoint 98 is disposed a distance D2 from inner surface 72. In one embodiment, distance D2 is approximately 0.282 ± 0.015 inches (0.7163 ± 0.0381 cm). In another embodiment, distance D2 is 0.282 ± 0.015 inches. As shown in FIG. 6, second end 102 may include blended corners 103. In one embodiment, rounded corners 103 have a radius of approximately 0.047 ± 0.015 inches (0.1194 ± 0.0381 cm). In another embodiment, rounded corners 103 have a radius of 0.047 ± 0.015 inches.

Body 60 includes a first trunnion 104 and a second trunnion 106 extending from opposed sides of outer wall 82. As shown in FIG. 5, first trunnion 104 has an outer diameter 108 and a length L1, and second trunnion 106 has an outer diameter 110 and a length L2. As shown in FIG. 6, first trunnion 104 includes a bore 112 formed therein, and second trunnion 106 includes a bore 114 formed therein. As shown in FIGS. 4 and 5, second trunnion 106 includes a flat 116 formed therein, which enables a control arm or other component (not shown) to rotate variable wobbler 54 about axis B to adjust the wobble angle thereof.

In one embodiment, outer diameters 108, 110 are approximately 0.6926 +0.0000 -0.0005 inches (1.7592 +0.0000 -0.0013 cm). In another embodiment, outer diameters 108, 110 are approximately 0.6926 +0.0000 -0.0005 inches. In one embodiment, length L1 is approximately 0.375 ± 0.010 inches (0.9525 ± 0.0254 cm). In another embodiment, length L1 is 0.375 ± 0.010 inches. In one embodiment, length L2 is approximately 0.892 ± 0.010 inches (2.2657 ± 0.0254 cm). In another embodiment, length L2 is 0.892 ± 0.010 inches. As shown in FIG. 5, proximal ends 118 of trunnions 104, 106 are separated by distance D4. In one embodiment, distance D4 is approximately 2.701 ± 0.002 inches (6.8605 ± 0.0051 cm). In another embodiment, distance D4 is 2.701 ± 0.002 inches.

Annular wall 68 includes a pair of diametrically opposed projections or tabs 120 extending from outer surface 70. Tabs 120 are configured to contact the variable housing portion of housing 42 to limit the amount of wobble rotation of variable wobbler 54. As illustrated in FIG. 5, tabs 120 have a width W1. In one embodiment, W1 is approximately 0.312 ± 0.015 inches (0.7925 ± 0.0381 cm). In another embodiment, W1 is 0.312 ± 0.015 inches.

As illustrated in FIG. 6, body second end 66 includes a conical surface 122 oriented at an angle Δ relative to axis B. In one embodiment, angle Δ is between approximately 20° and approximately 24°. In another embodiment, angle Δ is between 20° and 24°. In one embodiment, angle Δ is approximately 22° ± 1°. In another embodiment, angle Δ is 22° ± 1°.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A variable wobbler (54) of a hydraulic unit (32), the variable wobbler comprising:
a body (60) having a first end (64) and an opposite second end (66), the first end (64) including an annular wall (68) and an inner surface (72) configured to contact a piston of the hydraulic unit, the body further having an outer wall (82), an inner wall (84) defining an inner diameter (86), and a conical inner wall (85) extending from the inner wall;
a first trunnion (104) extending outwardly from the body; and
a second trunnion (106) extending outwardly from the body.

2. The variable wobbler (54) of claim 1, wherein a distance between opposed portions of the outer wall is between approximately 2.64 ± 0.010 inches (6.7056 ± 0.0254 cm) and approximately 2.701 ± 0.002 inches (6.8605 ± 0.0051 cm).

3. The variable wobbler of claim 1 or 2, wherein the inner diameter is approximately 1.053 ± 0.002 inches (2.6746 ± 0.0051 cm).

4. The variable wobbler of any preceding claim, wherein the conical inner wall (85) is oriented at an angle relative to an axis extending through a center of the inner diameter, wherein the angle is between approximately 15° and approximately 19°.

5. The variable wobbler of any preceding claim, wherein the conical inner wall (85) includes a first end (94) adjacent the inner wall, an opposite second end (102), and a midpoint (98) disposed between the first end and the second end, wherein the conical inner wall first end defines a first diameter (92), the midpoint (98) defines a second diameter (96), and the conical inner wall second end defines a third diameter (100).

6. The variable wobbler of claim 5, wherein the first diameter (92) is approximately 1.053 ± 0.002 inches (2.6746 ± 0.0051 cm).

7. The variable wobbler of claim 5, wherein the second diameter (96) is approximately 1.188 inches (3.0175 cm).

8. The variable wobbler of claim 5, wherein a distance between the conical inner wall midpoint (98) and the inner surface is approximately 0.282 ± 0.015 inches (0.7163 ± 0.0381 cm).

9. The variable wobbler (54) of any preceding claim, wherein the inner surface comprises a friction-reducing coating.

10. The variable wobbler (54) of claim 9, wherein the friction-reducing coating is between approximately 3 microns and approximately 5 microns.

11. The variable wobbler (54) of claim 10, wherein the friction-reducing coating is an Amorphous Diamond-like Carbon Coating.

12. The variable wobbler of any preceding claim, wherein the first trunnion (104) and the second trunnion (106) are diametrically opposed.

13. The variable wobbler of any preceding claim, wherein a distance between the first and second trunnions is approximately 2.701 ± 0.002 inches (6.8605 ± 0.0051 cm).

14. The variable wobbler of any preceding claim, wherein the first trunnion (104) has a length of approximately 0.375 ± 0.010 inches (0.9525 ± 0.0254 cm), and the second trunnion (106) has a length of approximately 0.892 ± 0.010 inches (2.2657 ± 0.0254 cm).
